# EUROPEAN PATENT APPLICATION

(11) **EP 1 111 831 A2**
(43) Date of publication of application: **27.06.2001**
(21) Application number: 00204748.8
(22) Date of filing: 22.12.2000
(51) Int. Cl.: H04J 14/02

(54) **Method of deactivating fiber resources in optical ring networks**

(30) Priority: 23.12.1999 US 471138; 23.12.1999 US 471139
(71) Applicant: Nortel Networks Limited, Montreal, Quebec H2Y 3Y4 (CA)
(72) Inventor: Phelps, Peter W., Nepean, Ontario K2J 2A5 (CA); Caporuscio, Robert, Montreal, Quebec H3M 2S9 (CA); Deboer, Evert E., Nepean, Ontario K2G 4A3 (CA); Leung, Johnny, Kirkland, Quebec H9J 3Z1 (CA); Charron, Paul, St. Lambert, Quebec J4S 1L4 (CA); Pare, Louis B, St.Bruno Quebec, J3V 5P6 (CA); Olajubu, Joseph, Canvey Island, Essex (GB)
(74) Representative: Ertl, Nicholas Justin

(57) **Abstract**

The present invention provides a method of deactivating working fiber pairs in an existing four-fiber optical ring network or system for a cost-effective and efficient allocation of the fiber resources available in the ring network. When a working fiber pair is underutilized in an existing ring network, the traffic scheduled for transmission thereon is re-routed around the network away from the fiber pair and lockouts are applied to prevent the fiber pair to be removed from being protected. The fiber pair and associated connecting equipment thus become unused and unnecessary for traffic carrying purposes and can then be deactivated. The present invention further provides a method of deactivating protection fiber resources in an existing optical interconnected ring network or system. The invention uses 1:N protection principles to provide a single protection path on spans interconnecting nodes common to two or more optical rings. According to the invention, the unused fiber pairs and equipment can be removed or alternatively be reprovisioned for use in other network configurations to provide a cost-effective and efficient allocation of the resources available in the network.

## Description

### FIELD OF THE INVENTION

This invention relates generally to optical ring networks and more particularly to a method of deactivating working and/or protection fiber resources in optical ring networks.

### BACKGROUND ART

Today's optical transport networks employ a number of different topologies to satisfy increasing demands for network simplicity, cost containment, bandwidth efficiency and survivability. Common network topologies include point-to-point terminal configurations, linear add/drop multiplexer configurations and ring configurations. Of all these different topologies, ring configurations are often the preferred network configuration for applications requiring high transport capacity.

In optical ring networks, the bandwidth available in each fiber interconnecting nodes can be allocated in various ways to meet different capacity demands. In some ring configurations, the bandwidth available for transport can be provisioned as a single optical transmission path. However, in the vast majority of ring configurations, the bandwidth is partitioned into channels or wavelengths to increase capacity.

In optical ring networks as in other optical configurations, it is common to use the term fiber generally to denote traffic carrying capacity. As such, in addition to denoting a physical fiber, the term "fiber" can also be used to denote a single channel or a wavelength in a physical fiber. For clarity and unless stated otherwise, the term "fiber" as applied generally to optical networks is hereinafter used to denote only a physical fiber.

In addition to providing large capacity, optical ring systems are also designed with redundant equipment to have other attributes such as, for example, bidirectionality and/or increased reliability to reduce service failures. In conventional unidirectional and bidirectional ring systems for example, multiple fibers are commonly installed to achieve transmit and receive operations. Additional fibers are also installed to "protect" the working fibers in the event of a link (span) failure. Current ring protection schemes include dedicated protection, 1+1 for UPSR (under path sw rings), with one protection fiber one working fiber, or 1:1 protection which can be used in both path UPSR switched and BLSR (bidirectional) switched ring configurations.

Because of the protection requirements that are necessary in a ring configuration, all spans in a ring are provisioned with at least one protection path. However, for some ring configurations, this requirement can lead to inefficiencies. In interconnected ring configurations for example, the interconnected rings must have distinct protection capabilities with at least one dedicated protection path for each span of each ring. On spans with interconnecting nodes common to two or more rings, this means that distinct protection paths are provisioned which therefore means an increased number of dedicated protection fibers between certain nodes. In applications with rapidly growing demands for ring interconnectivity, this protection usage is inefficient and can lead to considerable capital outlays, particularly on spans where a large number of rings overlap.

In addition to this ineffective use of protection fibers, the protection of multiple rings between nodes necessitates replicating some of the connection equipment required at each node. In interconnected ring systems such as described above, this would require duplicating some of the optics apparatus for each protection fiber provisioned. Duplicating this equipment for each protection fiber may also prove to have a considerable impact on the system cost.

Further, in optical ring networks, some spans that interconnect nodes are not required to carry working traffic. This is either because there is no requirement for traffic or because there is too much capacity available and it cannot all be efficiently used. This is particularly true for dense wavelength division multiplex (DWDM) systems where the number of channels or wavelengths available on some spans can very well exceed the transport capacity required.

Currently, all spans connecting adjacent nodes in a ring configuration have to be fiber equipped because of the protection traffic is necessary on a ring configuration. However, this requirement only makes use of protection fibers. On spans where traffic is low or non-existent, the working fibers present may never be used. As a result, the fiber capacity available in some optical ring networks may be under-utilized. This is particularly true for long distance networks or continental networks where traffic is largely concentrated on East-West spans and little if any traffic is transmitted along North-South spans. In these networks, the fiber capacity on North-South spans is not efficiently utilized and in many instances may not be needed for traffic carrying purposes.

In addition to this ineffective use of fibers, the accommodation of multiple fibers between nodes necessitates at each node the installation of connection equipment for each fiber. However, provision of equipment for each fiber may also prove to have a considerable impact on the system cost, particularly on spans where the fiber capacity is under-utilized.

Therefore, it would be desirable to use the existing working and protection fiber capacity more efficiently in optical ring networks or alternatively deactivate redundant or underutilized fibers and associated equipment so that they can be removed or re-provisioned for use in other network configurations.

### SUMMARY OF THE INVENTION

The present invention in a first embodiment provides a method of deactivating a span of working fiber resources in an existing four-fiber optical ring network or system for a cost-effective and efficient allocation of the fiber resources available in the ring network.

According to the first embodiment of the invention, when a working fiber pair between any two nodes in an existing ring network is underutilized, the traffic scheduled for transmission thereon is re-routed around the network away from that fiber pair. As a result, the fiber and associated connecting equipment thus become unused and unnecessary for traffic carrying purposes and can then be deactivated.

Advantageously, the first embodiment of the present invention is used in an optical network comprising a series of interconnected bidirectional line switched rings (BLSR) and eliminates the need for working fibers and associated optics equipment on spans of the BLSRs where traffic is low or non-existent and can provide fiber and equipment capacity savings of up to fifty percent on each span while retaining full protection usage.

The present invention in a second embodiment consists of a method of deactivating protection fiber resources in an existing four-fiber optical network having interconnected rings. This second embodiment of the invention can be used in any optical network or system with a separate path for protected traffic whether it is a physical fiber or wavelength to deactivate protection resources between nodes common to two or more optical rings.

In a preferred version of the second embodiment, the invention is incorporated in an optical network formed of a series of interconnected BLSRs to deactivate protection fibers between nodes common to two or more optical rings. According to this embodiment, a common protection path is defined between each pair of common nodes whereby only one protection fiber is used to provide protection for two or more optical rings supported there between. As a result, any other protection fiber and associated connecting equipment present there between can be deactivated.

With the sharing of a protection fiber on spans interconnecting common nodes, the second embodiment of the present invention advantageously provides substantial fiber capacity savings by eliminating the need for multiple protection paths and associated connecting equipment on these spans.

According to the invention, the unused fibers and equipment can be removed or alternatively be re-provisioned to provide a cost-effective and efficient allocation of the resources available in the network.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

FIG. 1 is a diagram of a conventional four-fiber bidirectional line switched ring (BLSR) network featuring a plurality of working fibers;
FIG. 2 is a diagram of the four-fiber BLSR network of Figure 1 with a reduced plurality of working fibers according to one version of the first embodiment of the invention;
FIG. 3 is a diagram of a conventional four-fiber matched node BLSR network featuring a plurality of working fibers;
FIG. 4 is a diagram of the four-fiber matched node BLSR network of Figure 3 with a reduced plurality of working fibers according to another version of the first embodiment of the invention; and
FIG. 5 is a diagram of the four-fiber BLSR network of Figure 1 with a reduced plurality of protection fibers according to the second embodiment of the invention.

### DETAILED DESCRIPTION OF THE PREFERRED EMBODIMENTS

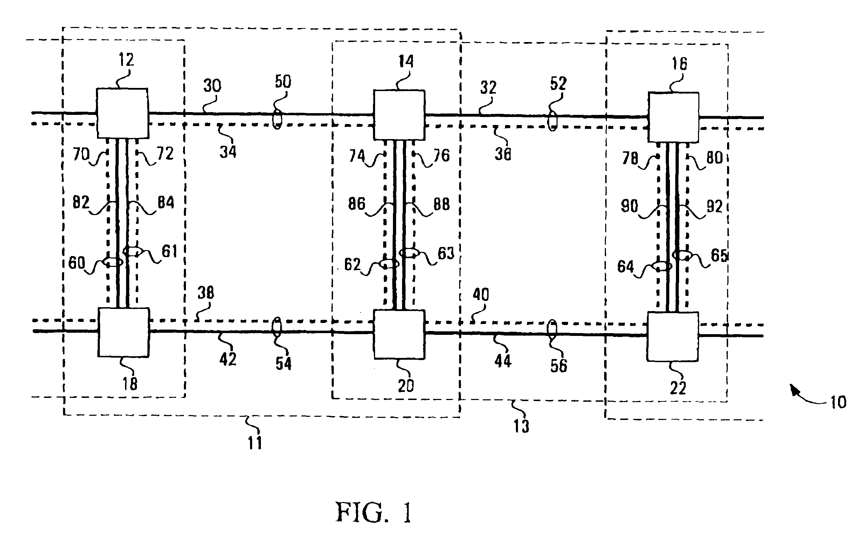

The invention is used in a bidirectional four-fiber line optical (BLSR) network of the type shown in Figure 1. The optical network 10 consists of multiple bidirectional line switched rings (BLSR) such as 11, 13 interconnected at common nodes 12, 14, 16, 18, 20, 22 forming a series of interworking rings. For the purpose of example, Figure 1 only shows two complete rings where a first ring 11 is formed of nodes 12, 14, 18, 20 and a second ring 13 is formed of nodes 14, 16, 20, 22. The nodes 12, 14, 16, 18, 20, 22 are interconnected with a number of bidirectional East-West and North-South fiber spans which can provide working and protection transport between the nodes 12, 14, 16, 18, 20, 22. In a four-fiber network a pair of the fibers in a span are the working fibers, one transmitting in a first direction and the other transmitting in the opposite direction. Similarly, the remaining pair of fibers are the protection fibers, one transmitting in the first direction and the other transmitting in the other direction.

Thus, the nodes 12, 14, 16 are interconnected with bidirectional fiber spans 50, 52 where the fiber span 50 consists of a bidirectional pair of working fibers 30 (shown as a single full line) and a bidirectional pair of protection fibers 34 (shown as a single dotted line) and the fiber span 52 consists of a bidirectional pair of working fibers 32 and a bidirectional pair of protection fibers 36. Similarly, the nodes 18, 20, 22 are interconnected with bidirectional fiber span 54 formed of a bidirectional pair of working fibers 42 (full line) and a bidirectional pair of protection fibers 38 (dotted line) and a span 56 formed of a bidirectional pair of working fibers 44 and a bidirectional pair of protection fibers.

The nodes 12, 14, 16 are respectively interconnected with the nodes 18, 20, 22 with a number of North-South fiber spans. More specifically, node 12 is interconnected with node 18 with a first pair of North-South fiber spans 60, 61. Between these nodes 12, 18, the span 61 provides North-South connectivity for traffic circulating in ring 11 while the span 60 provides connectivity for traffic circulating in an adjacent ring (not shown). Similarly, node 14 is interconnected with node 20 via a second pair of North-South fiber spans 62, 63 and node 16 is interconnected with node 22 with a third pair of North-South fiber spans 64, 65 where each span provides North-South connectivity for a particular ring. Each North-South fiber span 60, 61, 62, 63, 64 and 65 consists of a bidirectional pair of working fibers 82, 84, 86, 88, 90, 92 (full line) and a bidirectional pair of protection fibers 70, 72, 74, 76, 78, 80 (dotted line).

In the network 10, traffic is typically routed with a network management system such as the Applicant's integrated network management (INM) system. For the purpose of example, it is hereinafter assumed that the network management application used in the network 10 to route traffic is INM.

INM provides the necessary functionality to route traffic around the network 10. In the absence of failures, INM manages the routing of working traffic between the nodes 12, 14, 16, 22, 20, 18 along the East-West working fiber pairs 30, 32, 42, 44 and the North-South working fiber pairs 82, 84, 86, 88, 90, 92 present in the network 10. As is conventional, a localized controller present at each node 12, 14, 16, 18, 20, 22 supports the protection capabilities of span and ring switches redirecting traffic around failures. In the event of a failure or degradation of a working fiber, the nodes 12, 14, 16, 18, 20, 22 can enter a span switching mode to redirect traffic away from the fault and prevent a service outage. In this mode, the interrupted traffic is redirected from the defective working fiber pair onto a protection fiber pair available between the affected nodes 12, 14, 16, 18, 20, 22 thereby maintaining service for all terminating (span) and pass-through (ring) traffic. If a fault affects an entire fiber span between any two adjacent nodes 12, 14, 16, 18, 20, 22 (e.g. a node failure or a cable cut of both working and protection fibers in the fiber span), the affected traffic can be re-directed around the network 10 by ring protection switching.

In the network 10, all fiber spans 50, 52, 54, 56, 60, 61, 62, 63, 64, 65 connecting adjacent nodes 12, 14, 16, 18, 20, 22 need to be provisioned, even between two nodes that do not exchange traffic. This is for ensuring continuity of the protection traffic that is necessary for a ring protection switch. However, during a first sw, only protection fiber pairs 34, 36, 38, 40, 70, 72, 74, 76, 78, 80 are used.

To obtain better bandwidth efficiency and contain costs, it is possible to deactivate underutilized working fibers and associated connecting optics equipment present therein. According to the first embodiment of the invention, the deactivated fibers and associated equipment can be then removed or alternatively re-provisioned for use in other network configurations. For example, if there is little or no traffic on the North-South spans 60, 61, 62, 63, 64, 65, it is possible to remove some of the working fiber pairs 82, 84, 86, 88, 90, 92 with their respective optics equipment. Alternatively, it is possible to maintain and re-provision underutilized working fibers and equipment for use in other network configurations. Re-provisioning underutilized fibers and associated equipment would maximize the full capacity of the equipment bay by not leaving any slots vacant therein which could otherwise be used for other purposes in the same or other network configurations.

According to the first embodiment of the invention, it is also possible to deactivate underutilized working fiber pairs and equipment that may be present in the East-West fiber spans 50, 52, 54, 56. For the purpose of example, the following description is restricted to the deactivation of North-South working fiber pairs 82, 84, 86, 88, 90, 92 in the North-South spans 60, 61, 62, 63, 64, 65. It is understood however that this description also applies to the deactivation of underutilized working fibers and equipment in the East-West fiber spans 50, 52, 54 and 56.

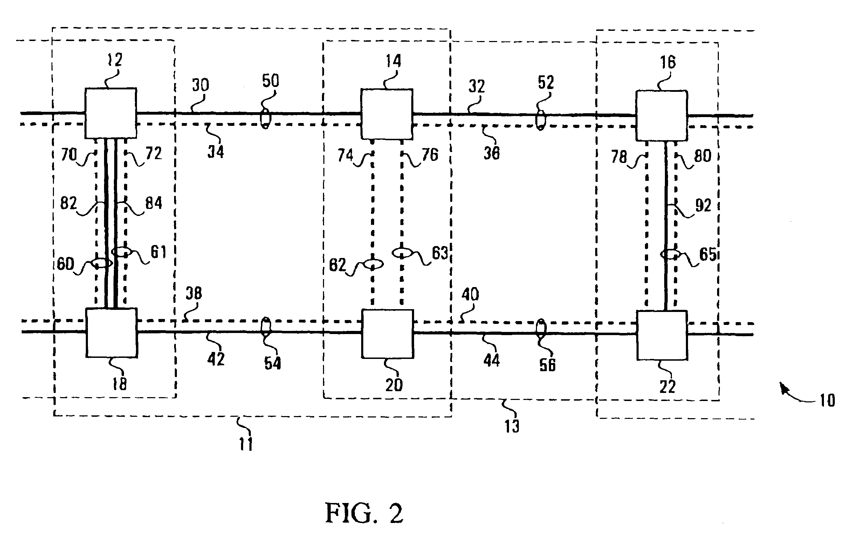

Figure 2 illustrates as an example the network 10 of Figure 1 where the working fiber pairs 86, 88 of span 62 and 63, the working fiber 90 of span 64 and their respective connecting equipment (not shown) have been deactivated and removed. Despite removing the working fiber pairs 86, 88 and 90 however, the spans 62, 64 are still equipped with the protection fiber pairs 74, 76, 78, 80 and can still provide full ring protection if necessary.

In order to deactivate the working fiber pair 86 and associated connecting equipment, the working traffic scheduled at nodes 14, 20 to be transmitted on the North-South span 62 is rerouted away from the under-utilized working fiber pair 86. In addition, access to the protection fiber pair 74 is locked out to prevent the span 62 from completing a span switch to the protection fiber pair 74 as the working fiber pair 86 or connecting equipment is deactivated.

To re-route traffic away and lock out access to the working fiber pair 86, a new INM mode hereinafter referred to as the working optics removed (WOR) mode is defined and applied at each node 14, 20 terminating the working fiber pair 86 to be deactivated. When operating in this mode, the nodes 14, 20 redirect working traffic away from the North-South fiber span 62.

More specifically, when the WOR mode is enabled, the traffic scheduled to transmit on the working fiber pair 86 and terminating at nodes 14, 20 (referred to as span traffic) or passing through the nodes 14, 20 (referred to as ring traffic) is instead rerouted around the network 10 for transmission on one or more alternate paths interconnecting the nodes 14, 20. For example, the span and ring traffic originally scheduled at node 14 to be transmitted to node 20 via the fiber pair 86 could instead be rerouted through the nodes 12 and 18 via the working fiber pairs 30, 84 and 42. The manner in which span and ring traffic can be rerouted between the nodes 14 and 20 on paths other than the fiber pair 86 would be obvious to a person skilled in the art and is not described here in any detail.

In addition to re-routing traffic, the nodes 14, 20 also each lock out access to the protection fiber 74. For this, two lockouts are applied at each node 14, 20: a lockout of working span and a lockout of working ring 11. Despite the absence of any traffic on the working fiber pair 86 (because of the re-routing), these lockouts are necessary to prevent the fiber span 62 from completing a span or ring switch to the protection fiber pair 74 when the working fiber pair 86 or connecting equipment is deactivated. However, these lockouts will not preempt ring protection switches in force on the span 62 and as such, the protection fiber pair 74 can still provide full ring protection capabilities to traffic elsewhere on the ring 11 when necessary.

By enabling the WOR mode in the nodes 14, 20, traffic to transmit on the working fiber pair 86 is rerouted around the network 10 on alternate paths and access to the protection fiber pair 74 is "locked out" so that the working fiber pair 86 and associated equipment can be deactivated. Once deactivated, the fiber pair 86 can then be disconnected and can be removed or re-provisioned. Similarly, the connecting equipment associated with the fiber pair 86 which typically includes circuit packs can be also be removed or re-provisioned for use in alternative network configurations.

According to the first embodiment of the invention, the WOR mode is preferably defined to automatically disable any alarm activated in relation to missing equipment. For example, the WOR mode is defined to automatically disable circuit pack missing alarms which would be otherwise activated when the fiber connecting equipment is removed. Further, in a preferred embodiment, it should not be possible to activate the WOR mode when working channel connections are provisioned across the fiber span 62.

There may be situations where it is desirable to deactivate underutilized working fibers on some spans yet still retain the ability to provision channel connections across these spans. For example, in matched node network configurations equipped with drop and continue on working (DCW) traffic connectivity, it is often desirable to remove underutilized working fibers yet preserve the ability to provision channel connections on spans where DCW connectivity is necessary.

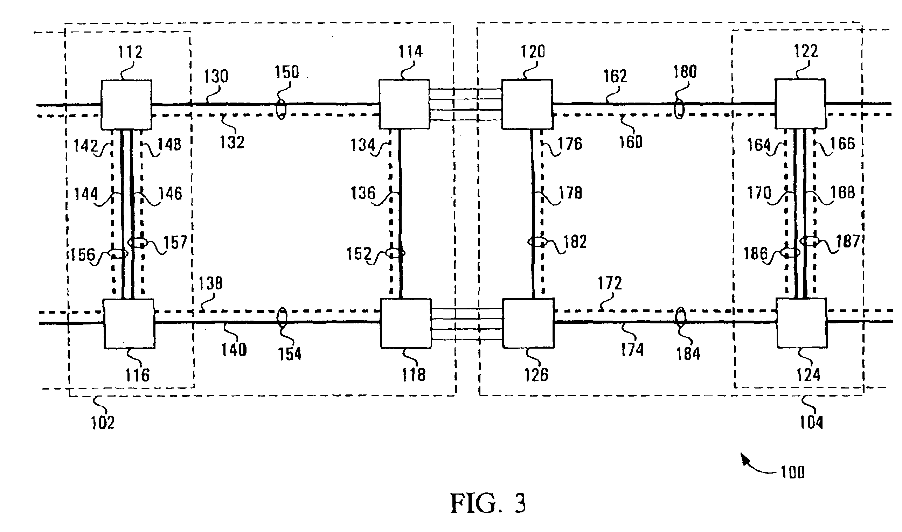

An example of a conventional matched node network which supports DCW traffic is shown in Figure 3 and is generally denoted by 100. Similarly to the network 10 of Figure 1, the network 100 is also formed of a series of interconnected BLSR rings. Figure 3 only shows two complete BLSR rings 102, 104 and for the purpose of example, only these two rings 102, 104 will now be described.

The first ring 102 is formed of a plurality of nodes 112, 114, 116, 118 (only four shown) interconnected with bidirectional East-West fiber spans 150, 154 and North-South fiber spans 152, 156, 157. The East-West fiber spans 150, 154 each consists of a bidirectional pair of working fibers 130, and a bidirectional pair of working fibers 140 (full line) and a bidirectional pair of protection fibers 132, and a pair of bidirectional protection fibers 138 (dotted line). The span 150 interconnects node 112 with node 114 while the span 154 interconnects node 116 with node 118. Similarly to the spans 150, 154, the North-South fiber spans 152, 156, 157 each comprise a bidirectional pair of working fibers 136, 144, 146 (full line) and a pair of bidirectional protection fibers 134, 142, 148 (dotted line). The span 152 interconnects node 114 with node 118 while the spans 156, 157 interconnect node 112 with 116. Between these nodes 112, 116, the span 157 provides North-South connectivity for traffic circulating in ring 102 while the span 156 provides connectivity for traffic circulating in an adjacent ring (not shown).

Similarly, the second ring 104 is formed of a plurality nodes 120, 122, 124, 126 (only four shown) interconnected with bidirectional East-West spans 180, 184 and North-South spans 182, 186, 187. The East-West spans 180, 184 each consists of a bidirectional pair of working fibers 162, 174 (full line) and a bidirectional pair of protection fibers 160, 172 (dotted line). The span 180 interconnects node 120 with node 122 while the span 184 interconnects node 126 with node 124. Similarly to the spans 180, 184, the North-South fiber spans 182, 186, 187 each consists of a bidirectional pair of working fibers 178, 170, 168 (full line) and a bidirectional pair of protection fibers 176, 164, 166 (dotted line). The span 182 interconnects node 120 with node 126 while the spans 170 and 168 interconnect node 122 with node 124. Similarly to the spans 156, 157 interconnecting node 112 with node 116 in the first ring 102, the span 186 provides North-South connectivity for traffic circulating in ring 104 while the span 187 provides connectivity for traffic circulating in an adjacent ring (not shown).

In the network 100, the rings 102, 104 are interconnected via tributary connections established between node 114 and node 120 and between node 118 and node 126. Each of these nodes 114, 118, 120, 126 has a plurality of tributary interfaces able to support interconnections with an adjacent ring. These interconnections provide the necessary support for inter-ring traffic.

In order to protect inter-ring traffic, the nodes 118 and 126 are configured as primary inter-ring gateway nodes and the nodes 114, 120 are provisioned as secondary inter-ring gateway nodes. For outbound traffic going from ring 102 to ring 104, DCW routing is employed within the primary gateway node 118 in ring 102 to pass the exiting traffic simultaneously to both the adjacent ring 104 and the secondary node 114. Outbound traffic directed from ring 104 to ring 102 is similarly transmitted using the same DCW routing and path selection technique. For clarity, the manner in which this is performed will now be described only in relation to traffic going from ring 102 to 104.

The outbound traffic going from ring 102 to 104 is transmitted as a primary transmission from the primary node 118 via tributary connections to the primary node 126 of the ring 104. In addition, the outbound traffic is also "dropped" on the working fiber 136 for transmission to the associated secondary gateway node 114. From the secondary node 114, the outbound traffic is then passed across tributary connections to the node 120 and subsequently forwarded therefrom as a secondary transmission to node 126 via the working fiber pair 178. At node 126, a service selector (not shown) bridges the primary transmission through. If a failure occurs interrupting or corrupting the primary transmission, the selector bridge the secondary transmission through to complete the outbound transmission.

It is well known, to provision primary and secondary matched nodes in the rings 102, 104. In the network 100, a node provisioned as a primary node (such as the nodes 118, 126) for a particular outbound transmission may also be provisioned as a secondary node for other outbound transmissions. In the same fashion, a node provisioned as a secondary node may also be provisioned as a primary node. Further, a primary node on one ring may feed either a primary or secondary node on an adjacent ring. This is also true of secondary nodes. More specifically, a secondary node on one ring may forward its transmissions to either a primary or secondary node on an adjacent ring. For the purpose of example however, it is hereinafter assumed that the nodes 114, 118, 120, 126 are connected as shown in Figure 3 and that only the nodes 118 and 126 are configured as primary nodes while only the nodes 114, 120 are configured as secondary nodes.

As in most ring configurations, traffic in the network 100 is typically concentrated on the East-West fiber spans 150, 154, 180, 184. With the exception of DCW traffic on the spans 152, 182, the North-South spans 152, 156, 157, 182, 186, 187 may have little or no traffic.

On the North-South spans 156, 157, 186, 187, there is no DCW traffic and the working fibers 144, 146, 170 can be deactivated as previously described i.e. by enabling a WOR mode at each terminating node 112, 116, 122, 124 and rerouting traffic around the network 100 on alternate paths.

On the North-South spans 152, 182, the working fiber pairs 136, 178 normally carry DCW traffic between the primary nodes 118, 126 and the secondary nodes 114, 120. However, with the exception of DCW traffic, these fiber pairs 136, 178 are typically underutilized or unused. According to another embodiment of the invention, these fiber pairs 136, 178 can also be deactivated from the spans 152, 182.

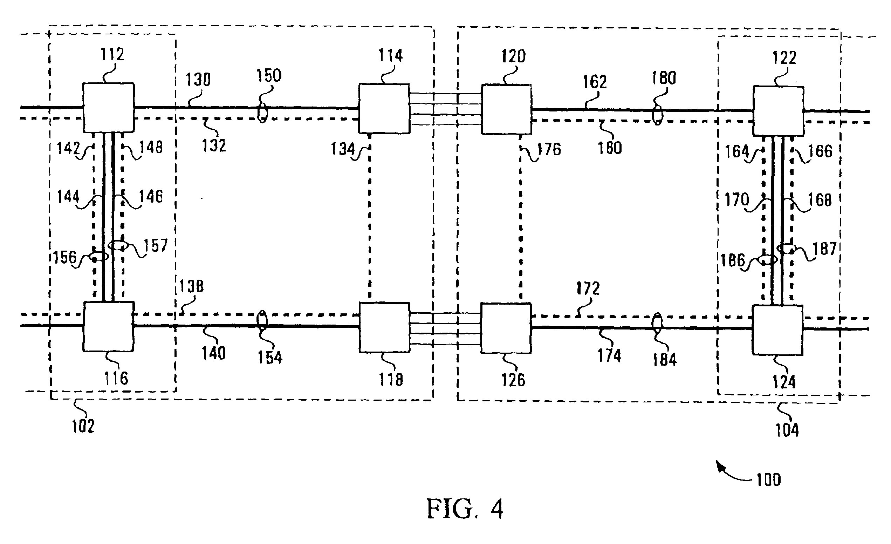

Figure 4 illustrates as an example the network 100 of Figure 3 where the working fiber pairs 136, 178 normally responsible for DCW traffic on the North-South spans 152, 182 have been deactivated and removed. The method by which the fiber pair 178 is deactivated is identical to the manner in which the fiber pair 136 is deactivated and will now be described below only in relation to the deactivation of the fiber pair 136.

In order to deactivate the working fiber pair 136, traffic other than DCW traffic is redirected away from the fiber pair 136. In addition, a channel connection is provisioned on the protection fiber pair 134 by means of a persistent user manual protection switch to place the DCW on the protection fiber pair 134 and maintain the necessary DCW traffic connectivity across the span 152.

For this, a new INM mode hereinafter referred to as the lockout of working unequipped (LWO-U) mode is defined and applied at each node 114, 118 terminating the fiber pair 136 to be removed. When operating in this mode, the nodes 114, 118 are provisioned to direct traffic away from the fiber pair 136 and around the ring 102. More specifically, when the LWO-U mode is activated, the span and ring traffic (other than DWC traffic) is routed around the ring 102 on alternate paths interconnecting the nodes 114, 118. The manner in which this particular traffic is routed around the network 100 on alternate paths would also be obvious to a person skilled in the art and is not described here.

In addition, the nodes 114, 118 each locks out access to the protection fiber pair 134 on the span 152 with a lockout of working span and a lockout of working ring. According to the invention, these span and ring lockouts respectively prevent the fiber span 152 from completing a span and ring switch of the span and ring traffic (other than DCW traffic) to the protection fiber 134 when the working fiber pair 136 or connecting equipment is deactivated and causes a signal fail or signal degrade condition on the span 152. These lockouts will not however preempt ring protection switches in force on the span 152 and as such, the protection fiber pair 134 can still provide full ring protection capabilities to traffic elsewhere on the ring 102 when necessary.

With respect to the DWC traffic, the nodes 114, 118 provision a channel connection on the protection fiber pair 134 to maintain the necessary DCW traffic connectivity across the span 152. More specifically, a user invoked manual switch is permanently applied at the nodes 114, 118 to position the DCW traffic on the protection fiber pair 134. In order to redirect DCW traffic on the protection fiber pair 134, the manual switch preempts the span and ring lockouts described above. It will be recalled that these lockouts prevent automatic switch access to the protection fiber pair 134. However, they are not designed to preempt user requests. Because the manual switch is applied as a user request, the manual switch can override the span and ring lockouts and place the DCW traffic onto the protection fiber pair 134 despite the presence of the span and ring lockouts.

Similarly to the span and ring lockouts however, this persistent manual switch will not preempt any ring protection switches from using the span 152. As a result, the protection fiber pair 134 can still provide full ring protection capabilities to traffic elsewhere on the ring 102 but will also accommodate the DCW traffic when not used for ring protection. This is because the manual switch is a special persistent manual switch that recurs after being preempted by a ring protection switch.

Therefore by placing the DCW traffic on the protection fiber pair 134, the working fiber pair 136 can thus be deactivated for removal and the necessary DCW connectivity on the span 152 maintained.

With the LWO-U mode activated at the nodes 114, 118, the span and ring traffic (except the DCW traffic) is redirected around the network 10, access to the protection fiber pair 134 is "locked out" and the DCW traffic is manually switched on the protection fiber pair 134. As a result, the working fiber pair 136 can be removed or re-provisioned. The LWO-U mode should preferably be defined to automatically disable any alarm activated when optics equipment is removed or re-provisioned. For example, the LWO-U mode should be defined to automatically disable circuit pack missing alarms which may be activated when the working fiber pair 136 or its connecting equipment is removed.

Now referring back to the conventional BLSR network 10 of Figure 1, each ring 11, 13 must have separate and distinct protection capabilities with a dedicated protection path on each of their respective spans. More specifically, in ring 11, each constituent span 50, 54, 61, 62 is provisioned with a protection fiber pair 34, 38, 72, 74. Similarly, in ring 13, the spans 52, 56, 63, 64 are also each provisioned with one protection fiber pair 36, 40, 76, 78.

However, this requirement does not provide an efficient and cost-effective allocation of the protection resources available in the network 10. Between nodes common and supporting two or more rings (hereinafter referred to as "common nodes"), a distinct protection fiber pair must be used for each ring. For example, between common nodes 14 and 20, two protection fiber pairs 74 and 76 must be used to provide a separate protection path for each ring 11, 13. Similarly, two protection fiber pairs 70, 72 or 78, 80 are used to provide distinct ring protection paths between common nodes 12 and 18 or between nodes 16 and 22.

To obtain better bandwidth efficiency and contain costs, it is possible to reduce the number of protection fiber pairs used between common nodes 12, 18, 14, 20 and 16, 22 while maintaining adequate protection for each ring 11, 13. According to the second embodiment of the invention, a common protection path can be defined between each pair of common nodes 12, 18, 14, 20 and 16, 22 whereby only one protection fiber is used to provide protection for the rings supported there between. In order to provide a common protection path between each pair of nodes 12, 18, 14, 20 and 16, 22, the invention takes advantage of the fact that each pair of nodes 12, 18, 14, 20 and 16, 22 is common to two rings ring (e.g. rings 11, 13). Although common nodes are not essential to the invention, they make the control aspects of the single protection path more practical.

By sharing a single protection fiber pair between each pair of nodes 12, 18, 14, 20 and 16, 22, the other protection fiber(s) and associated connecting equipment present there between can be deactivated. Between the common nodes 14 and 20 for example, a common protection path can be defined on the protection fiber pair 76 for both ring 11 and ring 13. With this common protection path, the protection fiber pair 74 and connecting equipment can be deactivated. Alternatively, it is also possible to provision the protection fiber pair 74 as a common protection path between the nodes 14, 20 and deactivate from use the protection fiber pair 76 and equipment.

According to the second embodiment of the invention, the deactivated protection fiber pair and associated equipment between the nodes 14 and 20 can be removed or alternatively re-provisioned for use in other network configurations. For example, if only the protection fiber pair 76 is used between the nodes 14 and 20, it is possible to remove the unused protection fiber pair 74 and its associated connecting equipment. Alternatively, it is possible to maintain and re-provision the unused protection fiber pair 74 and equipment for use in other network configurations. Re-provisioning unused protection fibers and associated equipment would maximize the full capacity of the equipment bay by not leaving any slots vacant therein which could otherwise be used for other purposes in the same or other network configurations.

In addition to deactivating a protection fiber pair and associated equipment between the nodes 14 and 20, it is also possible to deactivate protection fiber pairs and equipment between the nodes 12 and 18 or between the nodes 16 and 20. For the purpose of example, the following description is restricted to the deactivation of the protection fiber pair 74 and associated equipment between the nodes 14 and 20. It is understood however that this description also applies to the deactivation of protection fiber pairs and equipment between the nodes 12 and 18, and between the nodes 16 and 22.

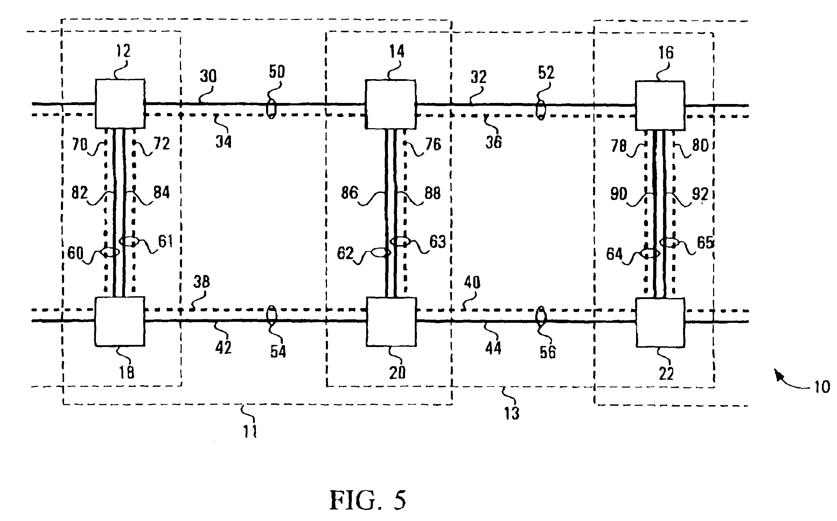

Figure 5 illustrates as an example the network 10 of Figure 1 where the protection fiber pair 74 of span 62 and its respective connecting equipment (not shown) have been deactivated and removed. In order to deactivate the protection fiber pair 74 and associated connecting equipment, a common protection path is defined on the protection fiber pair 76 to serve the protection requirements of both ring 11 and ring 13. By sharing the protection fiber pair 76 between ring 11 and ring 13, the protection fiber pair 74 and associated equipment become unnecessary and as a result, can be deactivated for removal or re-provisioning.

According to the second embodiment of the invention, the common protection path is implemented by operating each node 14, 20 terminating the protection fiber pairs 74 and 76 in a 1:N protection mode. In this particular mode, the nodes 14, 20 operate to determine which of the protection fiber pairs 74, 76 is to be used for the common protection path. Once a determination has been made that, for example, the protection fiber pair 76 is to be used, the nodes 14, 20 function to arbitrate the common protection path usage required by the rings 11, 13.

More specifically, the 1:N protection mode will cause the nodes 14, 20 to consider requests for protection (i.e. span and ring switch requests) from both rings 11, 13 and allocate the protection fiber pair 76 on a priority basis. According to the second embodiment of the invention, the protection requests issued by the rings 11, 13 are assigned different priorities so that the nodes 14, 20 can decide the order in which they should be serviced.

When issuing protection requests, each ring 11, 13 follows a ring priority assignment as with any standard ring network configuration. In addition to this however, the protection requests issued by each ring 11, 13 must also have assigned different "inter-ring" priorities so that the nodes 14, 20 can arbitrate requests of equal priority received from both rings 11, 13. For example, requests received from ring 11 could be assigned a priority lower than that assigned to ring 13 requests. Alternatively, requests from ring 13 could be assigned a priority lower than that assigned to requests from ring 11. The manner in which protection requests issued by the rings 11 and 13 can be assigned different priorities would be obvious to a person skilled in the art and is not described here in any detail.

In order to appropriately allocate the protection fiber pair 76, the nodes 14, 20 evaluate protection requests received from the rings 11, 13 on an intra-ring basis to establish the requests priorities within each ring 11, 13. In addition, the nodes 14, 20 also evaluate the requests received on an inter-ring basis by comparing request priorities of a particular ring 11, 13 with the request priorities of the adjacent ring 11, 13. Once the request priorities have been evaluated, the nodes 14, 20 reach and confirm a request priority agreement that establishes the order in which the protection requests received will be serviced. Based on the request priority agreement reached, the nodes 14, 20 can proceed to allocate the protection fiber pair 76.

According to the second embodiment of the invention, various protocols can be used to establish and confirm request priority agreements between the nodes 14, 20. Preferably, the protocols already used in the rings 11, 13 should both be extended through the protection fiber pair 76 for priority agreements. For this, bandwidth could be pre-allocated on the protection fiber pair 76 to support these two protocols. If for example K-bytes protocols are used in the rings 11, 13, bandwidth could be pre-allocated on the protection fiber pair 76 to extend the use of K-bytes across the fiber pair 76 for priority agreements between the nodes 14, 20. In this example, the nodes 12, 14, 16, 18, 20, 22 of each ring 11, 13 would see the K-bytes as they normally would with both protection fiber pairs 74, 76 present.

However, in order to support both ring protocols across the single protection fiber pair 76, it may be necessary to use bandwidth from different sources. For example, the synchronous optical network (SONET) / synchronous digital hierarchy (SDH) standard has defined an overhead which only allocates sufficient protocol bandwidth for one set of K-bytes. The additional protocol bandwidth necessary to support another set of K-bytes could be allocated by using other existing functionality in the SONET/SDH overhead or from subsequent synchronous transport signal (STS) line overhead which is otherwise unused. For example, the other set of K-bytes could be supported by unused functionality in subsequent STSs in an optical SONET or SDH signal.

By enabling the 1:N protection mode in the nodes 14, 20, only the protection fiber pair 76 is used for protection between the nodes 14, 20 and as a result, the protection fiber pair 74 and associated equipment can be deactivated. Once deactivated, the fiber pair 74 can then be disconnected and removed or re-provisioned. Similarly, the connecting equipment associated with the fiber pair 74 which typically includes circuit packs can be also be removed or re-provisioned for use in alternative network configurations.

According to the second embodiment of the invention, the 1:N mode should preferably be defined to automatically disable any alarm activated in relation to missing equipment. For example, the 1:N mode should be defined to automatically disable circuit pack missing alarms which may be activated when the fiber connecting equipment is removed. Further enhancements and precautionary interlocks are also possible. For example, it should not be possible to enable the 1:N mode if lockouts of any type or protection switches are in force on the ring 11 in which the protection fiber pair 74 is to be removed.

While the first and second embodiments of the invention have been described above with reference to a particular network topology, further modifications and improvements to support other network configurations which will occur to those skilled in the art, may be made within the purview of the appended claims, without departing from the scope of the invention in its broader aspect.

In particular, the invention has been described above in relation to BLSR network configurations. It should be understood that the first embodiment of the invention could alternatively be used in relation to BLSR network configurations with different ring arrangements. For example, the first embodiment of the invention could apply to a BLSR network configuration which consists of a single ring. In this case, the nodes forming the BLSR network would not need to provide matched node support. It should further be understood that the second embodiment of the invention is not restricted to BLSR networks. The manner in which the invention could be applied to other ring configurations would be obvious to a person skilled in the art and is not described here in any detail.

Yet further, it should be understood that on spans where working fiber pairs are to be removed, the first embodiment of the invention is not restricted to maintaining working connections for DCW traffic across these spans. There may be situations where it is desirable to maintain different connections for different traffic. For example, the invention could also be used to maintain a protection connection for drop and continue on protection (DCP) traffic which could be present on spans where working fiber pairs are to be removed. In this particular example, the span and ring traffic would still be rerouted around the network and the span and ring lockouts described above would still be required to prevent the working fiber to be deactivated from being protected. However, the persistent manual switch described above as directing DCW traffic onto a protection fiber would not be required as the DCP is already routed onto the protection fiber.

## Claims

1. A method of deactivating a first fiber pair interconnecting a first node and a second node in a four-fiber optical ring network where the first interconnecting fiber defines a working path for traffic between the first and second nodes and where a second interconnecting fiber pair defines a protection path for protecting traffic between the first and second nodes, the optical ring network being formed of a plurality of nodes interconnected with multiple fiber pairs which define multiple working paths and protection paths, the method comprising at each of the first and second nodes:
routing the traffic scheduled for transmission on the first interconnecting fiber pair via another working path defined in the optical network between the first and second nodes;
locking out access to the second fiber pair interconnecting the first and second node to prevent the first interconnecting fiber pair from being protected by the second interconnecting fiber pair; and
deactivating the first interconnecting fiber pair.

2. A method of deactivating a first fiber pair interconnecting a first node and a second node in a four-fiber optical ring network where the first interconnecting fiber pair defines a working path for traffic between the first and second nodes and where a second interconnecting fiber pair defines a protection path for protecting traffic between the first and second nodes, the optical ring network being formed of a plurality of nodes interconnected with multiple fiber pairs which define multiple working paths and protection paths, the method comprising at each of the first and second nodes:
routing a first portion of the traffic scheduled for transmission on the first interconnecting fiber pair to another working path defined in the optical ring network between the first and second nodes;
routing a second portion of the traffic scheduled for transmission on the first interconnecting fiber pair to the protection path defined between the first and second nodes by the second interconnecting fiber pair;
locking out access to the second interconnecting fiber pair to prevent the first interconnecting fiber pair from being protected by the second interconnecting fiber pair;
deactivating the first interconnecting fiber pair.

3. The method of claim 2 wherein the first portion of the traffic scheduled consists of span and ring traffic and wherein the second portion of the traffic scheduled for transmission on the first interconnecting fiber pair consists of drop and continue on working (DCW) traffic.

4. The method of claim 2 wherein the first portion of the traffic scheduled consists of span and ring traffic and wherein the second portion of the traffic scheduled for transmission on the first interconnecting fiber pair consists of drop and continue on protection (DCP) traffic.

5. The method of any one of claims 2 to 4 wherein routing a second portion of the traffic scheduled for transmission on the first interconnecting fiber pair to the protection path defined between the first and second nodes by the second interconnecting fiber pair comprises applying a manual switch to direct the second portion of the traffic scheduled for transmission on the first interconnecting fiber pair to the second interconnecting fiber pair.

6. The method of claim 5 wherein the second portion of the traffic scheduled for transmission on the first interconnecting fiber pair is directed to the second interconnecting fiber when the second interconnecting fiber pair is not used in a ring protection request.

7. The method of any one of claims 1 to 6 wherein locking out access to the second interconnecting fiber pair to prevent the first interconnecting fiber pair from being protected by the second interconnecting fiber pair comprises:
applying a lockout of working span on the second interconnecting fiber pair to prevent the first interconnecting fiber pair from being protected by a span switch; and
applying a lockout of working ring to prevent the first interconnecting fiber pair from being protected by a ring switch.

8. The method of any one of claims 1 to 7 wherein locking out access to the second fiber pair interconnecting the first and second node to prevent the first interconnecting fiber pair from being protected by the second interconnecting fiber pair is done when no protection switches is in effect in the optical ring network.

9. The method of any one of claims 1 to 7 wherein locking out access to the second fiber pair interconnecting the first and second node to prevent the first interconnecting fiber pair from being protected by the second interconnecting fiber pair is done when the first interconnecting fiber pair does not carry any span or ring traffic.

10. The method of any one of claims 1 to 9 further comprising removing the first interconnecting fiber pair.

11. The method of any one of claims 1 to 9 further comprising provisioning the first interconnecting fiber pair for use in another optical network.

12. The method of any one of claims 1 to 11 wherein the first and second nodes are each connected to the first interconnecting fiber pair with respective fiber connecting equipment, the method further comprising deactivating at each of the first and second nodes the corresponding fiber connecting equipment.

13. The method of claim 12 further comprising removing at each of the first and second nodes the corresponding fiber connecting equipment.

14. The method of claim 13 further comprising disabling at each of the first and second nodes fiber connecting equipment missing alarms associated with the corresponding fiber connecting equipment.

15. The method of claim 13 further comprising provisioning at each of the first and second nodes the corresponding fiber connecting equipment for use in another optical network.

16. The method of any one of claims 1 to 15 wherein locking out access to the second fiber pair interconnecting the first and second node to prevent the first interconnecting fiber pair from being protected by the second interconnecting fiber pair is done with a network management tool.

17. The method of any one of claims 1 to 16 wherein the optical ring network comprises at least one bidirectional line switched ring (BLSR).

18. A method of routing traffic between a first and a second node in a four-fiber optical network where the first and second nodes are interconnected with a first pair and second pair of fibers each pair defining a respective working path and a protection path, the optical network being formed of a plurality of nodes interconnected with fiber pairs which define multiple working paths and protection paths in the optical network, the method comprising at each of the first and second nodes:
scheduling traffic for transmission to the corresponding one of the first and second nodes;
routing the traffic scheduled from the first node to the second node via the first interconnecting fiber pair;
if the first interconnecting fiber pair is to be removed, re-routing the traffic scheduled via another working path defined in the optical network between the first and second nodes; and
locking access to the second interconnecting fiber pair at the first and second nodes to prevent the first interconnecting fiber pair from being protected by the second interconnecting fiber pair.

19. A first node for a four-fiber optical network comprising multiple nodes, the nodes being interconnected with fiber pairs which define working and protection paths, the first node being interconnected to a second node in the optical network with a first and second fiber pair respectively defining a working and a protection path there between, the first node being operable to schedule traffic for transmission to the second node, route the traffic scheduled to the second node via the first interconnecting fiber pair, and if the first interconnecting fiber pair is to be removed, the first node being operable to re-route the traffic scheduled via another working path defined in the optical network between the first and second nodes and lock access to the second interconnecting fiber pair to prevent the first interconnecting fiber pair from being protected by the second interconnecting fiber pair.

20. A method of deactivating a protection fiber pair interconnecting a first and a second node in a four-fiber optical network comprised of a plurality of nodes interconnected to form a series of interconnected optical rings, the protection fiber pair defining between the first and second nodes a first protection path for a first optical ring, the first and second nodes being interconnected with another protection fiber pair defining between the first and second nodes a second protection path for a second optical ring, the method comprising at each of the first and second nodes:
provisioning a common protection path on the other protection fiber pair for protection in the first and second optical rings;
arbitrating usage of the common protection path provisioned between the first and second optical rings; and
disconnecting the protection fiber pair.

21. The method of claim 20 wherein provisioning a common protection path for protection in the first and second optical rings is done by activating a 1:N protection mode.

22. The method of claim 21 wherein arbitrating usage of the protection path provisioned between the first and second optical rings comprises servicing protection requests received from the first and second optical rings on a priority basis.

23. The method of claim 22 wherein for servicing protection requests received from the first and second optical rings on a priority basis, each protection request has been assigned a different intra-ring and inter-ring request priority.

24. The method of claim 23 wherein servicing protection requests received from the first and second optical rings on a priority basis comprises:
evaluating request priorities of the protection requests received on an intra-ring basis;
evaluating request priorities of the protection requests received on an inter-ring basis;
determining between the first and second nodes a request priority assignment establishing the order in which the protection requests received are to be serviced; and
servicing the protection requests received based on the request priority assignment determined.

25. The method of claim 24 wherein determining between the first and second nodes a request priority assignment establishing the order in which the protection requests received are to be serviced is done over the other protection fiber using existing ring protocols.

26. The method of claim 25 wherein the ring protocols are K-bytes ring protocols.

27. The method of claim 20 wherein provisioning a common protection path on the other protection fiber pair for protection in the first and second optical rings is done when no protection switch is in effect in the optical network.

28. The method of claim 27 wherein disconnecting the protection fiber is done when the protection fiber pair does not carry any traffic.

29. The method of claim 28 further comprising removing the protection fiber pair.

30. The method of claim 28 further comprising provisioning the protection fiber pair for use in another optical network.

31. The method of claim 28 wherein the first and second nodes are each connected to the protection fiber pair with respective fiber connecting equipment, the method further comprising deactivating at each of the first and second nodes the corresponding fiber connecting equipment.

32. The method of any one of claims 20 to 31 wherein provisioning a common protection path for protection in the first and second optical rings is done with a network management tool.

33. The method of any one of claims 20 to 32 wherein the optical network comprises at least one bidirectional line switched ring (BLSR) network.

34. A network node adapted to implement the method of any one of claims 1 to 18 and 20 to 33.
